# EUROPEAN PATENT SPECIFICATION

(11) **EP 3 043 450 B1**
(45) Date of publication and mention of the grant of the patent: **03.07.2019**
(21) Application number: 16150104.4
(22) Date of filing: 04.01.2016
(51) Int. Cl.: H02K 5/20, H02K 9/06, H02K 9/28, H02K 9/14, F04D 29/58, H02K 5/08, H02K 5/14

(54) **MOTOR WITH HEAT DISSIPATION STRUCTURE CAPABLE OF RESTRAINING TEMPERATURE THEREIN**
MOTOR MIT WÄRMEABLEITUNGSSTRUKTUR ZUR AUFRECHTERHALTUNG DER TEMPERATUR DARIN
MOTEUR AVEC STRUCTURE DE DISSIPATION DE CHALEUR CAPABLE DE LIMITER LA TEMPÉRATURE À L'INTÉRIEUR DE CELUI-CI

(30) Priority: 08.01.2015 TW 104100603
(43) Date of publication of application: 13.07.2016
(73) Proprietor: Chou, Wen-San, Tainan City (TW)
(72) Inventor: Chou, Wen-San, Tainan City (TW)
(74) Representative: Lang, Christian

(56) References cited:
- EP-A2- 2 071 710
- WO-A1-99/04479
- CN-U- 201 509 112
- JP-A- 2002 010 575
- JP-U- H01 159 566
- US-A1- 2006 250 039

## Description

### (a) Technical Field of the Invention

The present invention relates to a motor with a heat dissipation structure and, more particularly, to a motor which has a sleeve being integrally formed with a plurality of wind-catching projections and has a cooling fan which can induce airflow to quickly enter the motor's housing via the wind-catching projections to dissipate the heat accumulated in the motor.

### (b) Description of the Prior Art

Today, motors are widely used in industry for providing mechanical power. When a motor, irrespective of lower or high power, is running, the rotor assembly (including an armature core formed by an iron core wound with enameled wire, a commutator, a brush unit, etc.) and the magnets in the motor's housing will generate heat and thus cause a temperature rise. In particular, the heat accumulated in the motor's housing may cause the brush unit to contain more carbon deposits, thus affecting the electrical circuit of the motor. Besides, high temperature resulting from the armature core may reduce the magnetic intensity of the magnets used in the motor. Thus, the performance of the motor will be gradually reduced.

Currently, emergency repair kits, which are commonly used in daily life, employ a low-power motor to drive a compressor unit therein for repairing punctured tires. However, in some countries, the Traffic Act stipulates that, when a vehicle has a punctured tire on a highway, the driver should repair the punctured tire within a specified period and should immediately drive away after the repair is completed to prevent rearward bump. Under these circumstances, for completing the repair as soon as possible, the motor of the compressor unit of an emergency repair kit should be operated at a higher speed. However, if the heat accumulated in the motor's housing cannot be quickly taken away, the performance of the motor will decrease. Even worse, the enameled wire of the armature core will probably be damaged to cause a short circuit, and thus the motor may burn out.

From documents CN 201 509 112 U, JP 2002 010575 A, JP H01 159566 A1, US 2006 / 250039 A1, WO 99 / 04479 A1 and EP 2 071 710 A2 motors are known, each of which comprises a cylindrical housing accommodating the motor body and being provided with inlet and outlet openings allowing a cooling air flow to enter the housing through the inlet openings and to exit the housing through the outlet openings to provide a cooling effect to the motor body.

For solving this problem, a motor is usually installed with a cooling fan at its output shaft. However, the airflow induced by the cooling fan can only flow along the outer surface of the motor's housing. Thus, the heat generated by the armature core, especially the enameled wire, in the motor is not easy to be taken away. The problem of a motor being subject to heat accumulation has not yet been overcome.

### SUMMARY OF THE INVENTION

One object of the present invention is to provide a motor with a heat dissipation structure. This object is achieved by an electric motor with the features of claim 1. Further embodiments are subject-matter of the dependent claims. The electric motor according to the invention comprises a substantially cylindrical housing, a rotor assembly, a cover, a sleeve, and a cooling fan. The housing defines a plurality of upstream through holes at its circumferential wall and a plurality of downstream through holes at its end closure wall. The sleeve is closely fitted around the circumferential wall of the housing. The sleeve is integrally formed with a plurality of wind-catching projections, around the circumferential wall of the housing, such that each wind-collecting projection is located above one of the upstream through holes of the housing, wherein each wind-catching projection defines an air guiding channel facing towards the cooling fan and communicating with one of the upstream through holes of the housing, so that the airflow induced by the cooling fan can easily pass through the air guiding channels and the upstream through holes to enter the housing, and can go out of the housing via the downstream through holes to take away the heat generated in the motor, so that heat is not easy to accumulate in the motor, and thus maximum power output of the motor can be achieved. Therefore, the performance and service life of the motor can be increased.

Other objects, advantages, and novel features of the present invention will become more apparent from the following detailed description when taken in conjunction with the accompanying drawings.

### BRIEF DESCRIPTION OF THE DRAWINGS

FIG. 1 shows a 3-dimensional view of a motor according to one embodiment of the present invention.
FIG. 2 shows a 3-dimensional view of the motor, which is viewed from a different angle than FIG. 1.
FIG. 3 shows a partially exploded view of the motor.
FIG. 4 shows an exploded view of the motor.
FIG. 5 shows a plan view of the motor.
FIG. 6 shows a sectional view of the motor taken along line A-A in FIG. 5, wherein the airflow entering the motor's housing is demonstrated.
FIG. 7 shows a sectional view of the motor taken along line B-B in FIG. 5, wherein the airflow entering the motor's housing is demonstrated.
FIG. 8 shows a sectional view of the motor taken along line C-C in FIG. 5, wherein the airflow entering the motor's housing is demonstrated.
FIG. 9 shows a schematic view of the motor, wherein some of the airflow flows along the outer surface of the motor's housing by way of recesses is demonstrated.

### DETAILED DESCRIPTION OF THE PREFERRED EMBODIMENTS

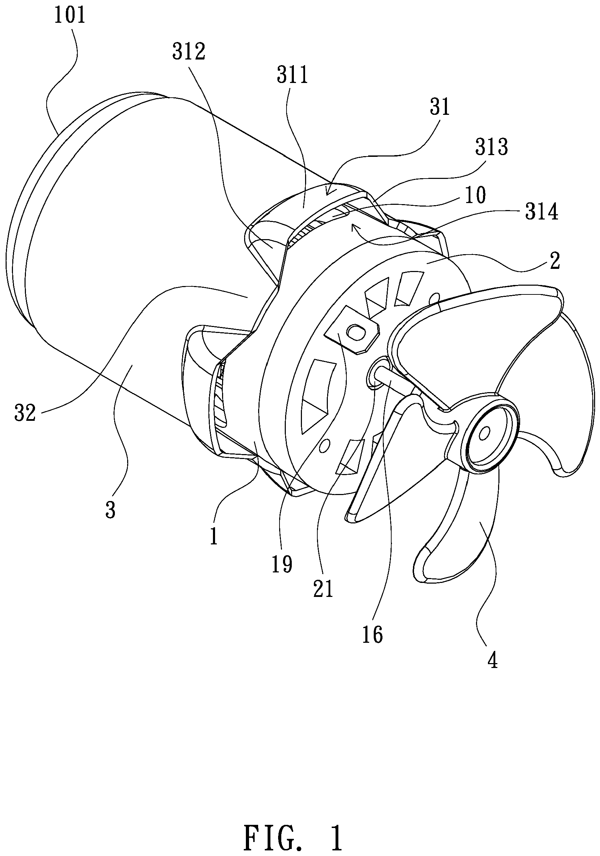

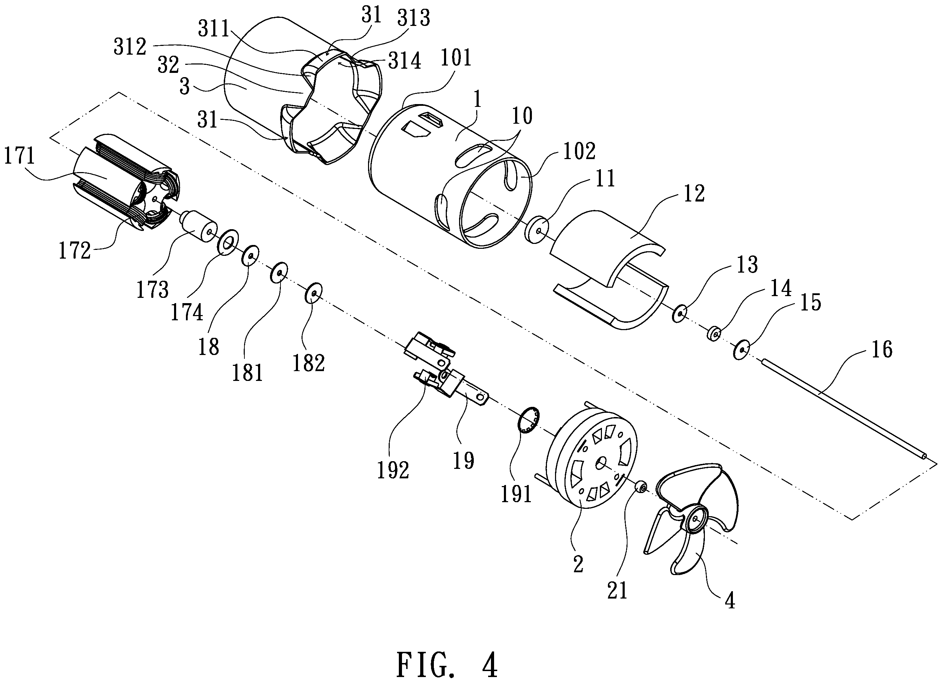

Since motors are commonly used devices, the principles of a motor's operation are not illustrated in the following paragraphs. However, basic elements of a motor will be described in this specification. Referring to FIGS. 1, 2 and 4, a motor according to one embodiment of the present invention is shown, which comprises a substantially cylindrical housing 1, a rotor assembly, a cover 2, a sleeve 3, and a cooling fan 4. The housing 1 has a circumferential wall which terminates at a flat closure wall 101 (a front end of the motor) and opens out at an opening 102 (a rear end of the motor) which is opposite to the flat closure wall 101. The flat closure wall 101 is provided with a first bearing 11 at its center and defines a plurality of downstream through holes 103 around the first bearing 11. The circumferential wall of the housing 1 defines a plurality of upstream through holes 10.

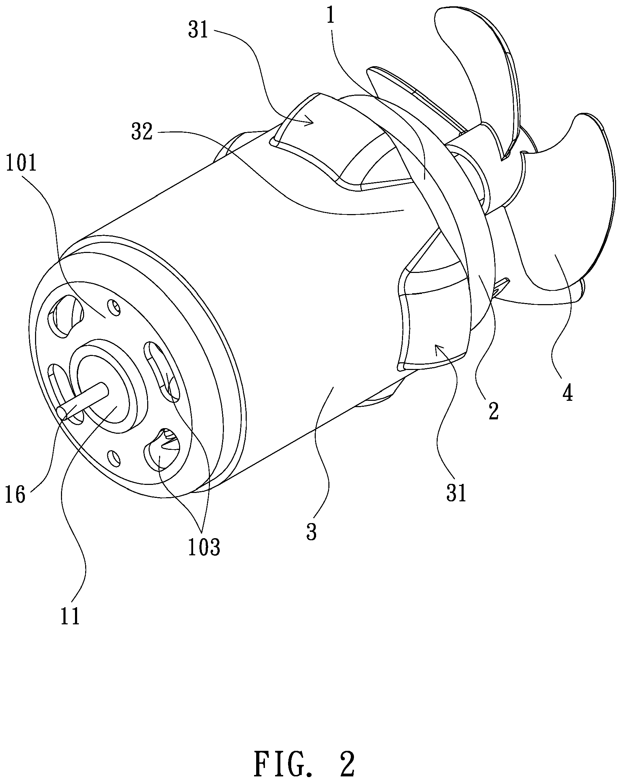

The housing 1 is provided with a pair of opposite magnets 12 at the inner surface of its circumferential wall. The rotor assembly, which is located in the housing 1, includes a number of washers 13, 181, 182, a thrust ring 14, an adjustment ring 15, a rotating shaft 16, an armature core formed by an iron core 171 wound with enameled wire 172, a commutator 173, a varistor 174, an oil-resistant ring 18, an electrical terminal unit 19, a compression ring 191, and a brush unit 192. A first end of the rotating shaft 16 is mounted to the first bearing 11 at the flat closure wall 101 of the housing 1 (see FIG. 2).

The cover 2 is provided with a second bearing 21 at its center and mounted to the housing 1 for sealing the opening 102 of the housing 1. A second end of the rotating shaft 16 of the rotor assembly is mounted at the second bearing 21 (see FIG. 1).

Referring to FIG. 1, the cooling fan 4 is installed to the second end of the rotating shaft 16 of the rotor assembly, near the cover 2.

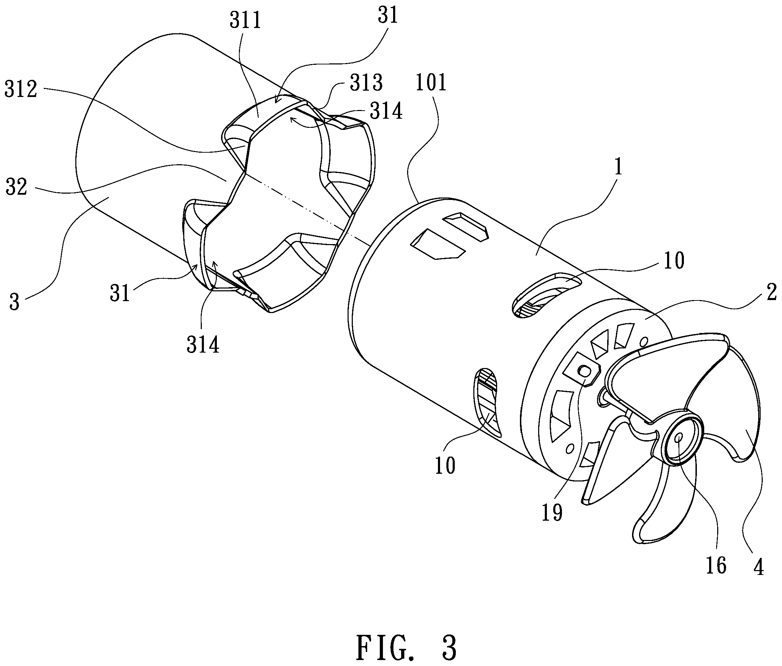

Referring again to FIG. 3, the sleeve 3, which can be made of a non-metallic material, is closely fitted around the circumferential wall of the housing 1. The sleeve 3 is integrally formed with a plurality of wind-catching projections 31, around the circumferential wall of the housing 1, such that each wind-collecting projection 31 is located above one of the upstream through holes 10 of the housing 1. Each of the wind-catching projections 31 is a bulging layer which has a curved roof 311 and two slant walls 312, 313 at two sides of the curved roof 311, wherein the curved roof 311 extends outwardly and towards the cooling fan 4. The curved roof 311 and the two slant walls 312, 313 of each wind-catching projection 31, and the circumferential wall of the housing 1 define an air guiding channel 314 facing towards the cooling fan 4 and communicating with one of the upstream through holes 10. A recess 32 is defined between two adjacent wind-catching projections 31.

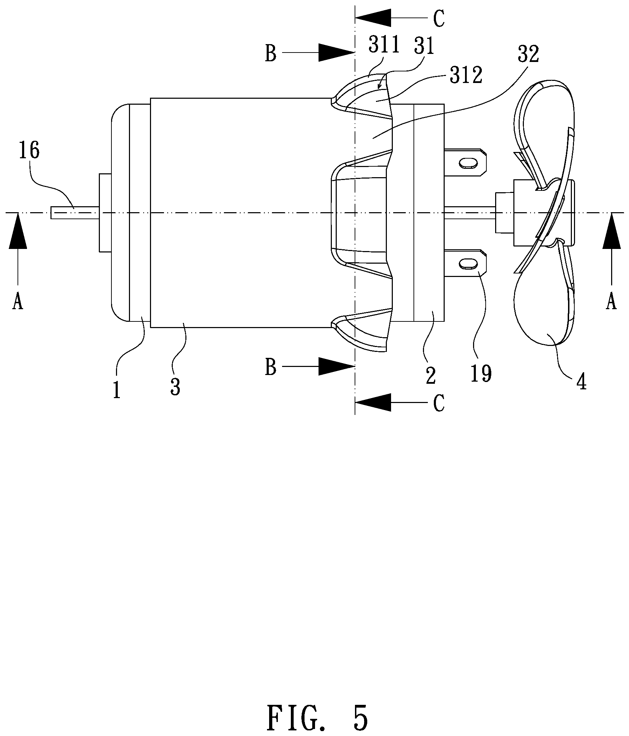

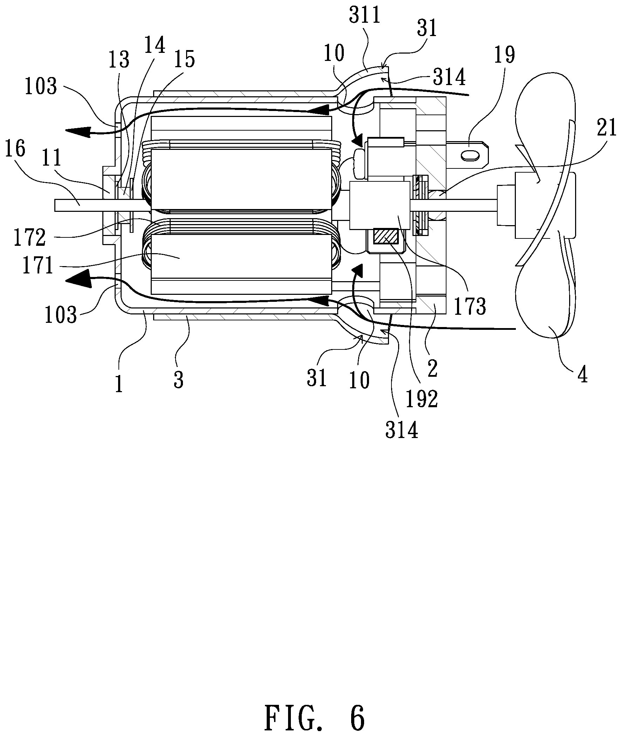

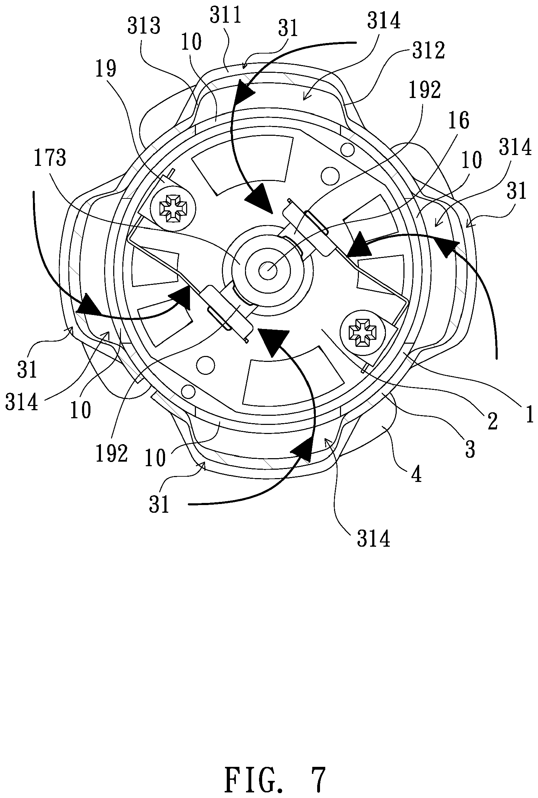

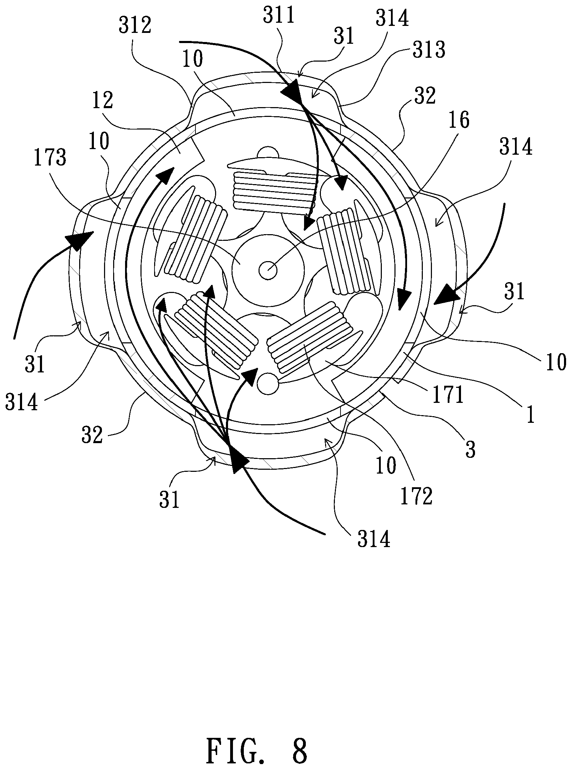

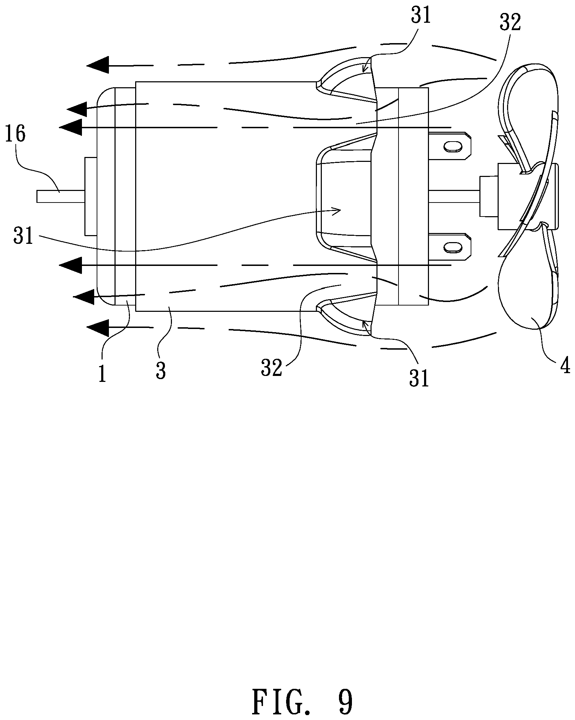

When the motor is running, as shown in FIGS. 5 through 9, the cooling fan 4 is rotated to induce airflow, which can pass through the air guiding channels 314 and the upstream through holes 10 to enter the housing 1, wherein the air guiding channels 314, which faces towards the cooling fan 4, can effectively collect most part of the airflow induced by the cooling fan 4 to enter the housing 1 and finally to go out of the housing 1 via the downstream through holes 103, so that the heat generated by the rotor assembly in the motor can be quickly dissipated. Particularly, the heat generated by the brush unit 192 and the commutator 173 (see FIGS. 6 and 7), the heat generated by the iron core 171 and the enameled wire 172 (see FIGS. 6 and 8) can be dissipated properly, so that heat is not easy to accumulate in the motor's housing. On the other hand, some of the airflow induced by the cooling fan 4, which does not enter the housing 1, may flow along the outer surface of the circumferential wall of the housing via the recesses 22 between the wind-catching projections 31 to cool down the housing 1 (see FIG. 9), so that the motor can be further protected from being damaged due to heat and thus the service life of the motor can be increased.

Alternatively, the sleeve 3 can be made of a magnetically permeable metal to further increase the performance of the motor.

As a summary, the present invention is featured in that the sleeve 3 is integrally formed with a plurality of wind-catching projections 31, each of which has one curved roof 311 and two slant walls 312, 313 at two sides of the roof 211, wherein the curved roof 311 extends outwardly and towards the cooling fan 4. The curved roof 311, the two slant walls 312, 313 of each wind-catching projection 31, and the circumferential wall of the housing 1 define an air guiding channel 314 facing towards the cooling fan 4 and communicating with one of the upstream through holes 10 of the motor's housing 1. Therefore, when the motor is running, the cooling fan 4 is rotated to induce airflow, which can easily pass through the air guiding channels 314 and the upstream through holes 10 to enter the motor's housing 1, and can finally go out of the housing 1 by way of the downstream through holes 103 to quickly take away the heat generated by the rotor assembly in the motor, so that heat is not easy to accumulate in the motor's housing 1. Therefore, the performance and service life of the motor can be increased.

## Claims

1. An electric motor including a substantially cylindrical housing (1), a rotor assembly including a rotating shaft (16), a cover (2), and a cooling fan (4), the housing (1) having a circumferential wall which terminates at a flat closure wall (101) and opens out at an opening (102) opposite to the flat closure wall (101), the flat closure wall (101) of the housing being provided with a first bearing (11) at its center and defining a plurality of downstream through holes (103), the circumferential wall of the housing (1) defining a plurality of upstream through holes (10), the rotor assembly being located in the housing (1), wherein a first end of the rotating shaft (16) of the rotor assembly is mounted to the first bearing (11) at the flat closure wall (101) of the housing (1), and wherein a second end of the rotating shaft (16) of the rotor assembly which is opposite to the first end thereof is mounted at a second bearing (21), the cooling fan (4) being mounted at said second end of a rotating shaft (16) of the rotor assembly,
**characterized in that**
the cover (2) is configured to be mounted to the housing (1) for sealing the opening (102) of the housing (1), wherein the cover (2) further cooperates with the housing (1) to define a receiving space;
the second bearing (20) is formed at the center of the cover (2) to allow the cooling fan (4) to be arranged near the cover (2) and outside the receiving space defined by the housing (1) and the cover (2); and
a cylindrical sleeve (3) is closely fitted around the circumferential wall of the housing (1), the sleeve (3) being integrally formed with a plurality of wind-catching projections (31) formed around its circumferential wall, such that each wind-collecting projection (31) is located above one of the upstream through holes (10) of the housing (1), wherein each wind-catching projection (31) defines an air guiding channel (314) facing towards the cooling fan (4) and communicating with one of the upstream through holes (10) of the housing (1), so that the airflow induced by the cooling fan (4) can easily pass through the air guiding channels (314) and the upstream through holes (10) to enter the housing (1), and can go out of the housing (1) via the downstream through holes (103); each of said wind-catching projections (31) is a bulging layer which has a curved roof (311) extending upwardly and towards the cooling fan (4), and two slant walls (312, 313) at two sides of the curved roof (311), the air guiding channel (314) of each wind-catching projection (31) being defined between the curved roof (311), the two slant walls (312, 313) thereof and the circumferential wall of the housing (1); whereby the airflow induced by the cooling fan (4) can easily pass through the air guiding channels (314) and the upstream through holes (10) to enter the housing (1); a recess (32) is defined between two adjacent ones of the wind-catching projections (31), so that some of the airflow induced by the cooling fan (4), which does not enter the housing (1), may flow along the outer surface of the circumferential wall of the housing (1) to cool down the housing (1).

2. The motor of claim 1, wherein the sleeve (3) is made of a non-metallic material.

3. The motor of claim 1, wherein the sleeve (3) is made of a magnetically permeable metal to further increase the performance of the motor.

## Patentansprüche

1. Elektromotor, umfassend ein im Wesentlichen zylindrisches Gehäuse (1), eine Rotorbaugruppe, die eine Drehwelle (16) beinhaltet, eine Abdeckung (2) und einen Kühlerlüfter (4), wobei das Gehäuse (1) eine Umfangswand hat, welche an einer flachen Abschlusswand (101) endet und an einer Öffnung (102) gegenüber von der flachen Abschlusswand (101) nach außen hin offen ist, wobei die flache Abschlusswand (101) des Gehäuses an ihrem Mittelpunkt mit einem ersten Lager (11) versehen ist und eine Mehrzahl von stromabwärts gelegenen Durchgangslöchem (103) aufweist, wobei die Umfangswand des Gehäuses (1) eine Mehrzahl von stromaufwärts gelegenen Durchgangslöchem (10) aufweist, wobei die Rotorbaugruppe in dem Gehäuse (1) angeordnet ist, wobei ein erstes Ende der Drehwelle (16) der Rotorbaugruppe an dem ersten Lager (11) an der flachen Abschlusswand (101) des Gehäuses (1) montiert ist, und wobei ein zweites Ende der Drehwelle (16) der Rotorbaugruppe, welches dem ersten Ende derselben gegenüber liegt, an einem zweiten Lager (21) montiert ist, wobei der Kühlerlüfter (4) an dem zweiten Ende der Drehwelle (16) der Rotorbaugruppe montiert ist,
**dadurch gekennzeichnet, dass**
die Abdeckung (2) zur Montage an dem Gehäuse (1) konfiguriert ist, um die Öffnung (102) des Gehäuses (1) dicht zu verschließen, wobei die Abdeckung (2) ferner mit dem Gehäuse (1) zusammenwirkt, um einen Aufnahmeraum zu definieren,
das zweite Lager (20) in der Mitte der Abdeckung (2) gebildet ist, um zu ermöglichen, dass der Kühlerlüfter (4) nahe der Abdeckung (2) und außerhalb des durch das Gehäuse (1) und die Abdeckung (2) definierten Aufnahmeraums angeordnet ist und dass eine zylindrische Hülse (3) eng anliegend um die Umfangswand des Gehäuses (1) angebracht ist, wobei die Hülse (3) integral mit einer Mehrzahl von Windfangvorsprüngen (31) ausgebildet ist, die um deren Umfangswand herum so ausgebildet sind, dass sich jeder Windfangvorsprung (31) über einem der stromaufwärts gelegenen Durchgangslöcher (10) des Gehäuses (1) befindet, wobei jeder Windfangvorsprung (31) einen Luftführungskanal (314) definiert, der in Richtung des Kühlerlüfters (4) weist und mit einem der stromaufwärts gelegenen Durchgangslöcher (10) des Gehäuses (1) kommuniziert, sodass der durch den Kühlerlüfter (4) induzierte Luftstrom leicht durch die Luftführungskanäle (314) und die stromaufwärts gelegenen Durchgangslöcher (10) hindurchgehen kann, um in das Gehäuse (1) einzutreten, und über die stromabwärts gelegenen Durchgangslöcher (103) aus dem Gehäuse (1) austreten kann; wobei jeder der Windfangvorsprünge (31) eine gewölbte Schicht ist, welche ein sich nach oben und in Richtung des Kühlerlüfters (4) erstreckendes gekrümmtes Dach (311) und an zwei Seiten des gekrümmten Dachs (311) zwei schräge Wände (312,313) hat, wobei der Luftführungskanal (314) von jedem Windfangvorsprung (31) zwischen dem gekrümmten Dach (311), den beiden schrägen Wänden (312, 313) davon und der Umfangswand des Gehäuses (1) definiert ist; wobei der durch den Kühlerlüfter (4) induzierte Luftstrom zum Eintritt in das Gehäuse (1) leicht durch die Luftführungskanäle (314) und die stromaufwärts gelegenen Durchgangslöcher (10) hindurchgehen kann, wobei eine Aussparung (32) zwischen zwei benachbarten Windfangvorsprüngen (31) definiert ist, sodass ein Teil des durch den Kühlerlüfter (4) induzierten Luftstroms, der nicht in das Gehäuse (1) eintritt, an der Außenfläche der Umfangswand des Gehäuses (1) entlangströmen kann, um das Gehäuse (1) abzukühlen.

2. Motor nach Anspruch 1, bei welchem die Hülse (3) aus einem nicht-metallischen Material gefertigt ist.

3. Motor nach Anspruch 1, bei welchem die Hülse (3) aus einem magnetisch permeablen Metall gefertigt ist, um die Motorleistung weiter zu erhöhen.

## Revendications

1. Moteur électrique incluant un logement sensiblement cylindrique (1), un ensemble rotor incluant un arbre rotatif (16), un couvercle (2), et un ventilateur de refroidissement (4), le logement (1) ayant une paroi circonférentielle qui se termine au niveau d'une paroi de fermeture plate (101) et s'ouvre au niveau d'une ouverture (102) opposée à la paroi de fermeture plate (101), la paroi de fermeture plate (101) du logement étant munie d'un premier palier (11) au niveau de son centre et définissant une pluralité de trous traversants aval (103), la paroi circonférentielle du logement (1) définissant une pluralité de trous traversants amont (10), l'ensemble rotor étant situé dans le logement (1), dans lequel une première extrémité de l'arbre rotatif (16) de l'ensemble rotor est montée sur le premier palier (11) au niveau de la paroi de fermeture plate (101) du logement (1), et dans lequel une seconde extrémité de l'arbre rotatif (16) de l'ensemble rotor qui est opposée à la première extrémité de ce dernier est montée au niveau d'un second palier (21), le ventilateur de refroidissement (4) étant monté au niveau de ladite seconde extrémité d'un arbre rotatif (16) de l'ensemble rotor,
**caractérisé en ce que**
le couvercle (2) est configuré pour être monté sur le logement (1) pour sceller l'ouverture (102) du logement (1), dans lequel le couvercle (2) coopère en outre avec le logement (1) pour définir un espace de réception;
le second palier (20) est formé au niveau du centre du couvercle (2) pour permettre au ventilateur de refroidissement (4) d'être agencé près du couvercle (2) et à l'extérieur de l'espace de réception défini par le logement (1) et le couvercle (2); et
un manchon cylindrique (3) est étroitement ajusté autour de la paroi circonférentielle du logement (1), le manchon (3) étant formé d'un seul tenant avec une pluralité de parties en saillie de prise de vent (31) formées autour de sa paroi circonférentielle, de sorte que chaque partie en saillie collectrice de vent (31) est située au-dessus de l'un des trous traversants amont (10) du logement (1), dans lequel chaque partie en saillie de prise de vent (31) définit un canal de guidage d'air (314) faisant face au ventilateur de refroidissement (4) et communiquant avec l'un des trous traversants amont (10) du logement (1), de sorte que le flux d'air induit parle ventilateur de refroidissement (4) peut aisément passer à travers les canaux de guidage d'air (314) et les trous traversants amont (10) pour entrer dans le logement (1), et peut sortir du logement (1) via les trous traversants aval (103); chacune desdites parties en saillie de prise de vent (31) est une couche d'expansion qui a un toit incurvé (311) s'étendant vers le haut et vers le ventilateur de refroidissement (4), et deux parois inclinées (312, 313) au niveau des deux côtés du toit incurvé (311), le canal de guidage d'air (314) de chaque partie en saillie de prise de vent (31) étant défini entre le toit incurvé (311), les deux parois inclinées (312, 313) de ce dernier et la paroi circonférentielle du logement (1); de sorte que le flux d'air induit par le ventilateur de refroidissement (4) peut facilement passer à travers les canaux de guidage d'air (314) et les trous traversants amont (10) pour entrer dans le logement (1); une partie en retrait (32) est définie entre deux parties adjacentes des parties en saillie de prise de vent (31), de sorte qu'un peu du flux d'air induit par le ventilateur de refroidissement (4), qui n'entre pas dans le logement (1), peut s'écouler le long de la surface extérieure de la paroi circonférentielle du logement (1) pour refroidir le logement (1).

2. Moteur selon la revendication 1, dans lequel le manchon (3) est fait d'une matière non métallique.

3. Moteur selon la revendication 1, dans lequel le manchon (3) est fait d'un métal magnétiquement perméable pour davantage augmenter la performance du moteur.
